# FASCICULE DE BREVET EUROPEEN

(11) **EP 3 242 360 B1**
(45) Date de publication et mention de la délivrance du brevet: **26.12.2018**
(21) Numéro de dépôt: 17164478.4
(22) Date de dépôt: 03.04.2017
(51) Int. Cl.: H01R 13/627, H01R 13/633, H01R 13/53, H01R 13/645, H01R 13/506

(54) **DISPOSITIF DE VERROUILLAGE POUR CONNECTEURS ÉLECTRIQUES ET CONNECTEURS ÉLECTRIQUES ÉQUIPÉS DU DISPOSITIF**
VERRIEGELUNGSVORRICHTUNG FÜR ELEKTRISCHE ANSCHLÜSSE, UND MIT EINER SOLCHEN VORRICHTUNG AUSGESTATTETE ELEKTRISCHE ANSCHLÜSSE
LOCKING DEVICE FOR ELECTRICAL CONNECTORS AND ELECTRICAL CONNECTORS PROVIDED WITH THE DEVICE

(30) Priorité: 03.05.2016 FR 1654009
(43) Date de publication de la demande: 08.11.2017
(73) Titulaire: EAXTRON, 75116 Paris (FR)
(72) Inventeur: CHEVREAU, Mathieu, 37100 Tours (FR); VAN DER MEE, Marnix, 37270 Montlouis sur Loire (FR)
(74) Mandataire: Weber, Etienne Nicolas

(56) Documents cités:
- EP-A2- 1 065 756
- US-A- 4 288 142
- US-A- 5 487 678

## Description

### Domaine technique

La présente invention concerne un dispositif de verrouillage destiné à des connecteurs électriques, ainsi que des connecteurs électriques équipés du dispositif de verrouillage.

On entend par connecteur électrique appareil destiné à relier électriquement un équipement électrique à un autre équipement électrique pourvu d'un connecteur complémentaire, tout en offrant la possibilité d'une séparation ultérieure. Les connecteurs électriques peuvent se présenter de manière usuelle comme un couple de connecteurs du type à fiches et à douilles, du type à fiches et à prises, ou encore, de manière plus générale, avec des éléments de contact électrique conjugués. De tels connecteurs sont utilisables notamment pour relier les conducteurs de câbles électriques. Les connecteurs peuvent aussi se présenter comme un couple formé d'un connecteur libre, relié à un câble électrique, par exemple, et un connecteur formant une embase fixe ou ayant un socle solidaire d'un équipement ou d'une installation.

L'invention trouve des applications dans le domaine technique des connecteurs électriques, et en particulier pour des connecteurs de forte puissance.

On entend par connecteur de forte puissance des connecteurs dimensionnés pour la transmission de courants d'une intensité supérieure à 100A.

L'invention peut en particulier être mise en oeuvre pour des connecteurs destinés à relier des véhicules électriques, à une source d'alimentation, telle qu'une batterie d'alimentation ou de relier une batterie d'alimentation de ces véhicules à une station de chargement. L'invention peut notamment être appliquée à des chariots élévateurs électriques.

### Etat de la technique antérieure

Le document EP 0 354 582 donne une illustration d'un ensemble de connecteurs électrique d'un type susceptible d'être équipé d'un dispositif de verrouillage conforme à l'invention.

On connait également des connecteurs électrique pourvus d'un mécanisme de verrouillage, et en particulier avec un mécanisme de verrouillage entre les boîtiers de connecteurs.

Le recours à un mécanisme de verrouillage vise essentiellement à éviter un désengagement accidentel des connecteurs, notamment sous l'effet d'une traction exercée sur un câble électrique auquel ils sont reliés.

De tels mécanismes de verrouillage existent pour des connecteurs à faible courant, comme par exemple les connecteurs de transfert de signal pour des équipements informatiques, mais aussi pour des connecteurs à plus fort courant.

On peut se reporter à ce sujet, au document EP1 049 212, par exemple, qui concerne un connecteur pourvu d'un verrou à baïonnette.

EP-1 065 756A divulgue également un dispositif de verrouillage comprenant une gâche, un pêne et une languette configurée pour être introduite dans la gâche avec le pêne.

### Exposé de l'Invention

Dans le cadre de l'invention un certain nombre de difficultés ont été relevés concernant les connecteurs à verrou.
Ces difficultés tiennent essentiellement aux points suivants:
- Un certain nombre de connecteurs à verrou sont complexes ou fastidieux à accoupler ou à libérer, ou nécessitent un outillage spécifique pour la manoeuvre du verrou.
- Un certain nombre de connecteurs à verrou demandent un temps de libération du verrou peu compatible avec une séparation d'urgence des connecteurs.
- Un certain nombre de connecteurs à verrou présentent le risque qu'un opérateur ne saisisse le boîtier des connecteurs à proximité de conducteurs sous tension lors de la libération du verrou ou lors de la séparation des connecteurs.
Au vu des difficultés ci-dessus, l'invention vise à proposer un dispositif de verrouillage de connecteur amélioré et un ensemble de connecteurs présentant notamment un ou plusieurs des avantages suivants :
- facilité d'engagement et de libération du verrou,
- fiabilité de la connexion et du verrouillage,
- possibilité de libération rapide à une main,
- possibilité d'adaptation du verrou sur des connecteurs existants,
- interchangeabilité du dispositif de verrouillage,
- faible coût de fabrication.
Pour atteindre ces buts, l'invention propose en particulier un dispositif de verrouillage destiné à un ensemble de connecteurs électriques comprenant au moins un premier et un deuxième connecteur conjugués, pouvant être accouplés.
Le dispositif de verrouillage comprend :
- au moins une gâche susceptible d'être rendue rigidement solidaire du deuxième connecteur, la gâche présentant un passage pour pêne, et dans le passage pour pêne, un premier relief de verrouillage,
- au moins un pêne susceptible d'être rendu rigidement solidaire du premier connecteur, le pêne présentant une section ajustée au passage de pêne de la gâche, pour une introduction du pêne dans la gâche, parallèlement à un axe du pêne, et
- une languette, reçue dans un logement du pêne, la languette s'étendant parallèlement à l'axe du pêne, et étant configurée pour être introduite dans la gâche conjointement avec le pêne, la languette étant pourvue d'un deuxième relief de verrouillage et la languette présentant une flexibilité suffisante pour un déplacement du deuxième relief de verrouillage entre une position saillante sur une face du pêne tournée vers le premier relief de verrouillage lors d'une introduction du pêne dans la gâche, et une position rétractée dans le logement du pêne, le deuxième relief de verrouillage étant configuré pour un passage le long du premier relief de verrouillage dans la position rétractée lors de l'introduction du pêne dans la gâche et pour occuper la position saillante derrière le premier relief de verrouillage dans un sens d'introduction du pêne dans la gâche, lorsque le pêne occupe une position de verrouillage dans la gâche.
Dans la position de verrouillage, le premier et le deuxième relief de verrouillage forment un emboîtement s'opposant au retrait du pêne de la gâche.
On entend par connecteurs conjugués des connecteurs présentant des éléments de connexion électrique mâle et femelle complémentaires et pouvant être réunis par une insertion mutuelle d'au moins une partie des connecteurs. Par extension on considère également comme des connecteurs conjugués, des connecteurs présentant des boîtiers avec des parties mâle et femelle complémentaires pouvant être insérés les uns dans les autres, ou réunis par emboîtement, ou plus généralement par complémentarité de forme.

La "gâche" du mécanisme de verrouillage est ainsi désignée dans la mesure où elle peut notamment être configurée comme un logement accueillant une partie mâle du dispositif de verrouillage désignée par pêne. Il convient cependant de préciser que lors du verrouillage, la gâche et le pêne coopèrent pour empêcher un déplacement du pêne parallèlement à son axe plutôt que perpendiculairement à son axe comme dans un verrou traditionnel. La gâche présente un passage pour le pêne. Cependant, et comme cela apparait encore dans la suite de la description il n'est pas indispensable que la gâche entoure entièrement l'extrémité du pêne lorsque le pêne est introduit dans la gâche. Il suffit en effet que la gâche et l'extrémité du pêne présentent une complémentarité de forme apte à garantir l'interaction entre les reliefs de verrouillage, pour retenir le pêne dans la gâche, dans une position verrouillée. L'ajustement de la section du pêne au passage pour pêne de la gâche est compris dans ce sens.
La flexibilité de la languette permet une rétractation du deuxième relief de verrouillage de manière sensiblement perpendiculaire à l'axe du pêne. Elle a lieu dans le logement du pêne qui reçoit la languette. La rétractation du deuxième relief permet son passage au-dessus du premier relief, de la gâche, lors de l'introduction du pêne dans la gâche. Lorsque l'introduction du pêne est poursuivie parallèlement à l'axe de pêne, le deuxième relief vient se loger derrière le premier relief par rapport au sens d'introduction du pêne dans la gâche, et reprend sa position saillante par un effet de rappel de la lame flexible. Un emboîtement du deuxième relief derrière le premier relief de verrouillage provoque entre le premier et le deuxième relief de verrouillage une interaction empêchant le retrait du pêne de la gâche. L'interaction est une interaction par complémentarité de forme.

En l'absence de caractéristiques supplémentaires, l'emboîtement peut être prévu comme un emboîtement irréversible.
Toutefois, et de préférence pour des connecteurs de puissance, l'emboîtement peut être prévu comme un emboîtement réversible décrit ci-après.

En effet, et dans selon un mode de réalisation préféré du dispositif, la languette et le pêne peuvent être pourvues de plages d'appui conjuguées, la languette présentant alors une liberté de translation dans le logement du pêne, parallèlement à l'axe du pêne, entre :
- une position proximale, dans laquelle les plages d'appui conjuguées sont en contact, et dans laquelle les plages d'appui conjuguées interdisent une flexion de la languette avec un déplacement du deuxième relief de verrouillage de la position saillante vers la position rétractée, et
- une position distale, dans laquelle les plages d'appui conjuguées sont séparées, pour autoriser un déplacement du deuxième relief de verrouillage de la position saillante vers la position rétractée, par flexion de la languette.
La languette peut coulisser dans le logement du pêne entre la position proximale et la position distale.

Dans la position proximale, de déplacement du deuxième relief de verrouillage est interdit, ce qui permet, lorsque le pêne est engagé dans la position de verrouillage de maintenir l'emboîtement des reliefs de verrouillage et de garantir leur interaction qui empêche le retrait du pêne de la gâche.
Dans la position distale, les plages d'appui conjuguées de la languette et du pêne sont suffisamment distantes pour permettre une flexion de la languette et la rétractation du deuxième relief de verrouillage. Un retrait du pêne de la gâche est alors possible.
On peut accessoirement noter que le déplacement de la languette relativement au pêne entre sa position proximale et sa position distale est possible que le pêne soit ou non engagé dans la gâche.
Selon une possibilité de mise en oeuvre intéressante du dispositif, la position proximale de la languette peut être prévue plus proche d'une extrémité libre du pêne que la position distale de la languette. Cette particularité fait que le blocage de la languette et du relief de verrouillage accompagne de manière automatique l'introduction du pêne de la gâche. A l'inverse, la libération de la languette et de son relief de verrouillage peut se faire dans le même sens que celui d'un retrait du pêne dans la gâche. Cette particularité permet une utilisation intuitive du verrou lorsqu'il est associé à un connecteur.

Le dispositif de verrouillage peut comporter au moins un ressort de rappel de la languette dans la position proximale.
Lorsque le pêne n'est pas encore engagé une première interaction entre les reliefs de verrouillage permet alors de repousser la languette dans sa position distale à l'encontre de la force de rappel du ressort de rappel. La languette est repoussée par l'effort d'engagement du pêne ou du connecteur dont il est solidaire. Le déplacement du deuxième relief de verrouillage de sa position saillante vers la position rétractée est alors libéré et une introduction du pêne est possible.
Lors d'un effort de retrait du pêne ou du connecteur dont il est solidaire, l'action des plages d'appui conjuguées s'oppose au déplacement de la languette et du deuxième relief de verrouillage de la manière déjà décrite.
Ainsi, le dispositif de verrouillage peut comporter en outre une poignée, solidaire de la languette, et actionnable manuellement pour déplacer la languette de la position proximale vers la position distale et la libérer.
La poignée peut présenter un axe médian de traction formant avec l'axe du pêne un angle compris de préférence entre 0 et 20 degrés d'angle. Le faible angle entre la poignée et le pêne permet d'utiliser intuitivement la poignée pour déplacer la languette vers la position distale et retirer le pêne de la gâche. Lorsque le dispositif de verrouillage est solidaire d'un connecteur, la même poignée peut encore être utilisée pour séparer le connecteur d'un connecteur conjugué maintenu fixe.
Cette possibilité de réalisation du dispositif de verrou est particulièrement avantageuse dans la mesure où seule une traction sur la poignée permet de libérer le verrou et séparer le connecteur du connecteur conjugué. Comme indiqué ci-dessus, une traction sur le boîtier du connecteur sans actionner la poignée ne permet pas de libérer le connecteur dans la mesure où la languette reste dans sa position proximale et le deuxième relief de verrouillage est maintenu dans sa position saillante interdisant le retrait du pêne.

Selon une autre particularité du dispositif de verrouillage, au moins l'un du premier relief de verrouillage et du deuxième relief de verrouillage peut présenter au moins une rampe configurée pour coopérer avec l'autre du premier relief de verrouillage et du deuxième relief de verrouillage, pour pousser le deuxième relief de verrouillage de la position saillante vers la position rétractée lors d'une introduction du pêne dans la gâche ou lors d'un retrait du pêne de la gâche.

Cette particularité permet un actionnement automatique du relief de verrouillage lors de l'insertion du pêne ou de son retrait de la gâche.
L'invention concerne encore un ensemble de connecteurs comprenant au moins un premier et au moins un deuxième connecteur conjugués, et un dispositif de verrouillage tel que décrit ci-dessus, dans lequel la gâche est rigidement solidaire du deuxième connecteur et dans lequel le pêne est rigidement solidaire du premier connecteur. Il convient de souligner que le fait que le pêne soit fixé à un connecteur ne préjudicie pas au déplacement relatif de la languette entre ses positions proximale et distale mentionnées précédemment.
Le premier et le deuxième connecteur de l'ensemble de connecteurs, peuvent comporter des boîtiers en un matériau isolant électrique, logeant chacun au moins un élément de contact électrique. Les boîtiers et/ou les éléments de contact électrique du premier et du deuxième connecteur présentent une complémentarité de forme autorisant une insertion mutuelle. De même le pêne et la gâche sont solidaires des boîtiers et configurés pour une insertion du pêne dans la gâche, respectivement pour un retrait du pêne de la gâche, simultanément à l'insertion mutuelle, respectivement d'un retrait, des éléments de contact et/ou des boîtiers.
L'insertion mutuelle des éléments de contact s'entend comme une insertion totale ou partielle d'un élément de contact dans un élément de contact conjugué, par exemple une broche dans une douille, ou dans un manchon conducteur.
L'insertion mutuelle des boîtiers s'entend comme une insertion d'une partie mâle d'un boîtier de connecteur dans une partie femelle correspondante d'un boîtier de connecteur conjugué. Le positionnement du pêne et de la gâche sont tels que leur insertion ou leur retrait a lieu de concert avec les boîtiers et/ou les éléments de contact.
Par ailleurs, et de manière préférentielle, le pêne et la gâche, et en particulier les éléments de verrouillage mentionnés précédemment, sont configurés pour provoquer un verrouillage du pêne dans la gâche correspondant lorsqu'une insertion mutuelle des boîtiers ou des éléments de contact est suffisante pour garantir la continuité électrique entre les éléments de contact des connecteurs conjugués.

Le pêne peut être rendu solidaire du boîtier du premier connecteur par vissage et/ou par complémentarité de forme.

La gâche peut être rendue solidaire du deuxième connecteur par emboîtement irréversible ou également par vissage.
D'autres caractéristiques et avantages de l'invention ressortent de la description qui suit en référence aux figures des dessins. Cette description est donnée à titre illustratif et non limitatif.

### Brève description des figures

La figure 1A est une perspective d'un connecteur à boîtier mâle et une première partie d'un dispositif de verrouillage pourvue d'un pêne et d'une poignée, et destinée à être montée sur le connecteur à boîtier mâle.
La figure 1B est une perspective du connecteur de la figure 1A avec la première partie du dispositif de verrouillage montée sur le connecteur.
La figure 2A est une perspective d'un connecteur à boîtier femelle et une deuxième partie d'un dispositif de verrouillage pourvue d'une gâche, et destinée à être montée sur le connecteur à boîtier femelle.
La figure 2B est une perspective du connecteur de la figure 2A avec la deuxième partie du dispositif de verrouillage montée sur le connecteur à boîtier femelle.
La figure 3 montre en perspective les connecteurs des figures 1B et 2B insérés mutuellement, et le dispositif de verrouillage en position verrouillée.
La figure 4 est une coupe transversale médiane d'une partie des connecteurs et du dispositif de verrouillage de la figure 3.
La figure 5 est une vue partielle, en coupe partielle, de la première et de la deuxième partie du dispositif de verrouillage, respectivement en prise, selon une face destinée à être tournée vers les connecteurs.
La figure 6 est une vue de la première partie du dispositif de verrouillage selon une face destinée à être tournée vers les connecteurs.

### Description détaillée de modes de mise en oeuvre de l'invention.

Dans la description qui suit des parties identiques ou similaires des différentes figures sont indiquées avec les mêmes références numériques, de manière à faciliter le report d'une figure à l'autre.
Par ailleurs, les différentes figures sont réalisées selon une échelle libre.

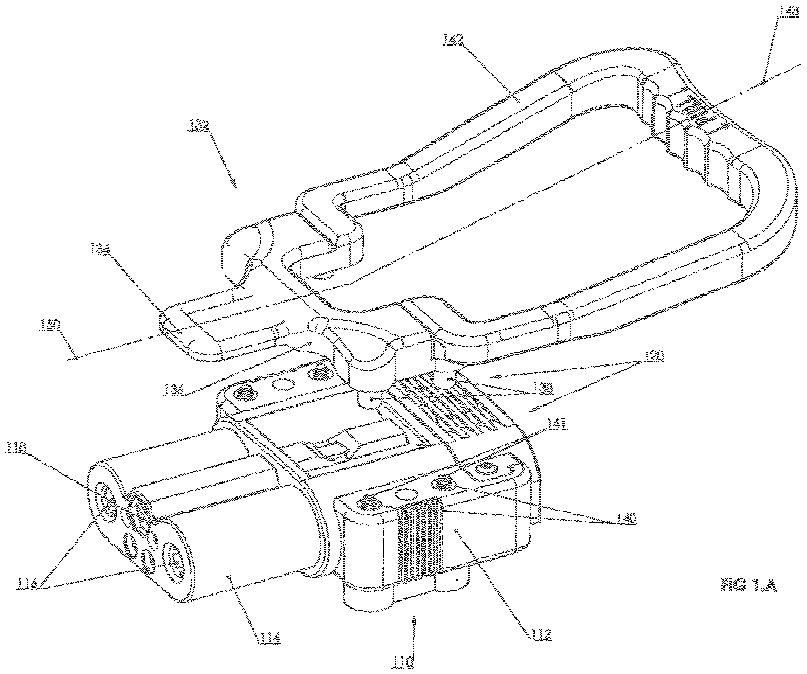

La figure 1A montre un premier connecteur 110 comprenant un boîtier 112 mâle. Le boîtier mâle 112 présente une partie d'insertion mâle 114 qui loge des éléments de contact femelle 116 sous la forme de douilles ou de manchons. Les éléments de contact femelle 116 sont susceptibles de recevoir des éléments de contact mâle conjugués tels que des broches, non visibles sur la figure. La partie d'insertion mâle 114 présente également un organe détrompeur 118 configuré pour une compatibilité sélective avec des boîtiers femelle, notamment en termes de tension et/ou de courant. Le boîtier mâle est en un matériau isolant électrique, par exemple en matière plastique, de manière à pouvoir être saisi par un utilisateur.
A l'opposé de la partie d'insertion mâle 114 le premier connecteur 110 présente des passages 120 pour des câbles électriques non représentés.
Une première partie 132 du d'un mécanisme de verrouillage est représentée détachée du premier connecteur 110, de manière à montrer son caractère amovible. La première partie 132 du mécanisme de verrouillage comporte également une partie mâle, sous la forme d'un pêne 134. Le pêne 134 est solidaire d'une embase de fixation 136, qui permet de fixer la première partie 132 du mécanisme de verrouillage sur un boîtier de connecteur. L'embase de fixation 136 présente des plots de centrage 138 susceptibles de coopérer avec des empreintes correspondantes 140 du boîtier mâle 112. Des vis 141 traversant les empreintes 140 du boîtier mâle sont prévues pour solidariser l'embase 136 du boîtier mâle 112.
La première partie 132 du mécanisme de verrouillage présente également une poignée 142 s'étendant à l'opposé du pêne 134. On peut observer qu'un axe médian de traction 143 de la poignée 142 fait un angle faible, de l'ordre de 0 à 20 degrés d'angle avec un axe 150 du pêne 134. L'axe 150 du pêne passe par le pêne et est situé dans un plan de symétrie de la première partie 132 du mécanisme de verrouillage.

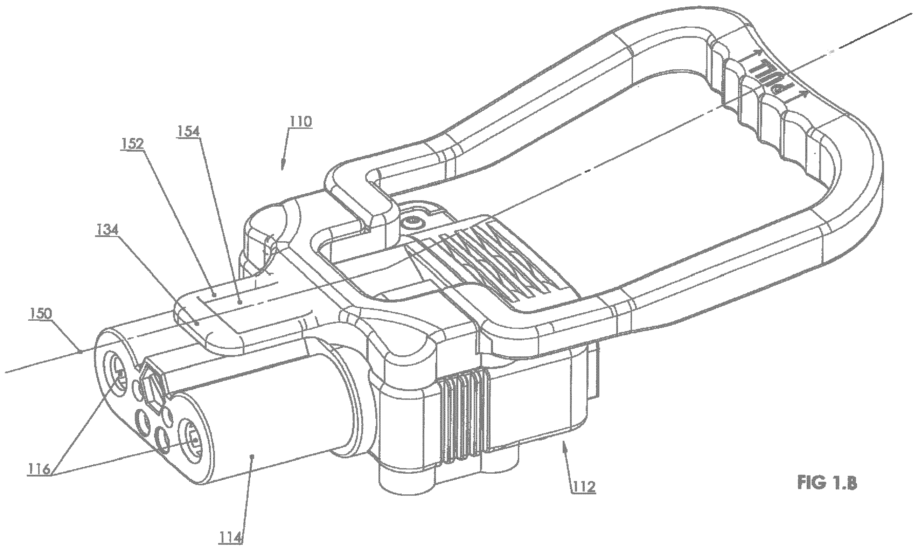

La figure 1B montre le premier connecteur 110 et la première partie 132 du mécanisme de verrouillage assemblés et rigidement solidaires. L'axe 150 du pêne est situé dans un plan de symétrie du premier connecteur et s'étend parallèlement à des axes d'éléments de contact femelle 116 du premier connecteur 110.
Le pêne 134 s'étend le long de la partie d'insertion mâle 114 du boîtier mâle 112. Il présente une forme aplatie sensiblement perpendiculaire au plan de symétrie du premier connecteur.
On peut encore observer que le pêne 134 présente une partie centrale évidée formant un logement 152 et recevant une languette 154.

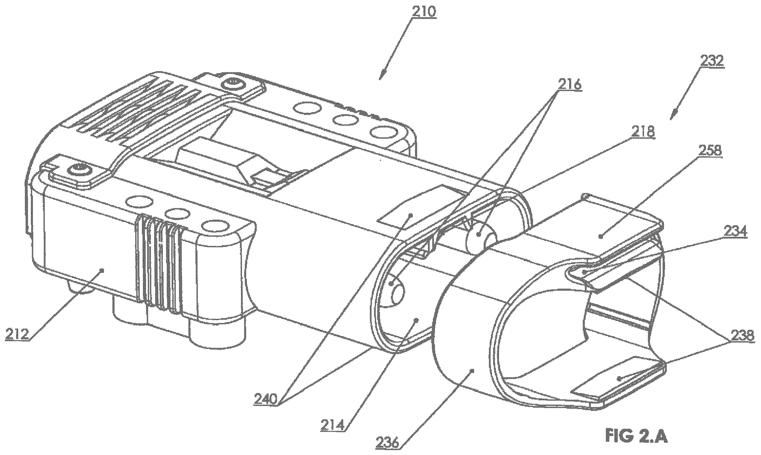

La figure 2A montre un deuxième connecteur 210, conjugué au premier connecteur de la figure 1A, et comprenant un boîtier 212 femelle. Le boîtier femelle 212 présente une partie d'insertion femelle 214 qui loge des éléments de contact mâle 216 sous la forme de broches. La partie d'insertion femelle présente une complémentarité de forme avec la partie d'insertion mâle du boîtier mâle des figures 1A et 1B, pour une insertion mutuelle des boîtiers et des éléments de contact. La partie d'insertion femelle 214 présente également un organe détrompeur 218 configuré conjugué à l'organe détrompeur de la partie d'insertion mâle du premier connecteur.
La figure 2A montre également une deuxième partie 232 du mécanisme de verrouillage pourvue d'une gâche 234. La gâche 234 est solidaire d'une bague 236 dimensionnée pour pouvoir coulisser sur une paroi extérieure de la partie d'insertion femelle 214 du deuxième connecteur 210, de manière à y fixer la gâche 234. La bague de fixation 236 présente des bossages 238, dont une seule est entièrement visible sur la figure 2A. Les bossages 238 sont configurés pour coopérer avec des empreintes 240 correspondantes en dépression dans la paroi du boîtier femelle 212 de manière à réaliser un emboîtement irréversible.
L'emboîtement irréversible permet de rendre la bague 236 et donc la gâche rigidement solidaires du boîtier femelle. Selon une autre possibilité, non représentée, la deuxième partie 232 du mécanisme de verrouillage peut également être vissée sur le boîtier femelle 212.

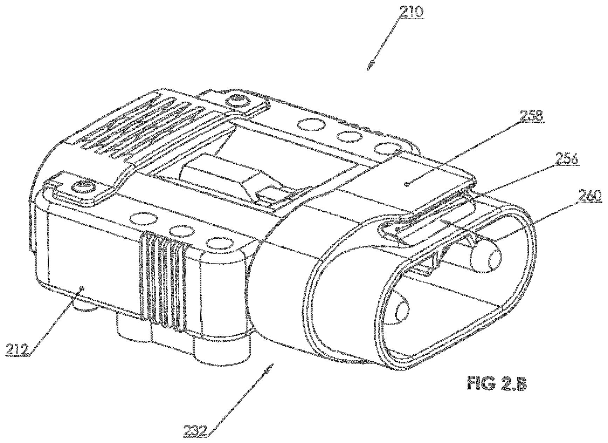

La figure 2B montre la deuxième partie 232 du mécanisme de verrouillage en place sur le boîtier femelle 212 du deuxième connecteur 210. On peut observer que la gâche présente un premier relief 256 voisin d'une extrémité de la partie d'insertion femelle. La gâche présente également un ponton 258 reliant des parois latérales de la gâche. Le ponton 258 s'étend de manière sensiblement parallèle au premier relief 256. Entre le premier relief et le ponton un passage 260 est prévu pour recevoir le pêne du premier conducteur décrit en référence aux figures 1A et 1B.

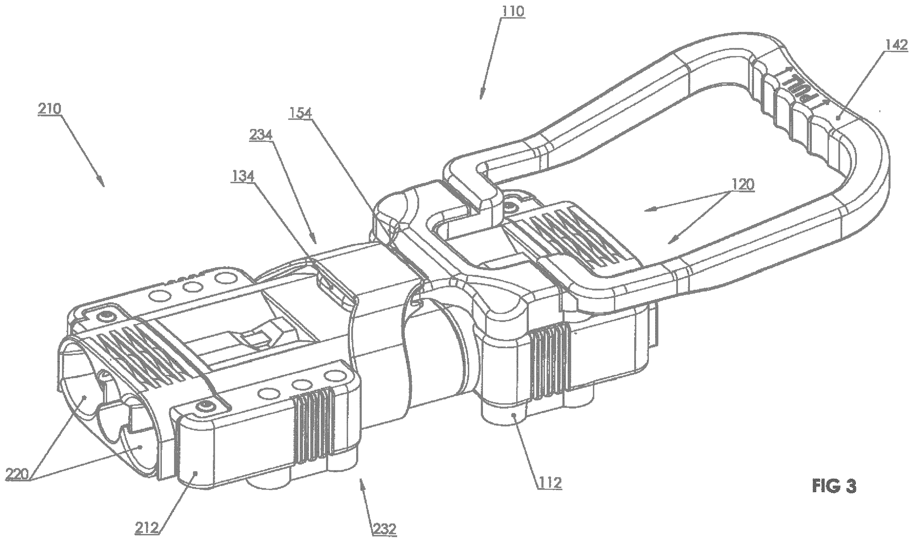

La figure 3 montre le premier et le deuxième connecteur 110, 210 assemblés. La partie d'insertion mâle du boîtier male 112 est entièrement reçue dans la partie d'insertion femelle du boîtier femelle 212 et le pêne 134 est reçu dans la gâche 234. On peut observer sur le boîtier femelle 212 du deuxième connecteur 210 des passages 220 pour des câbles électriques. Les câbles électriques ne sont pas représentés.

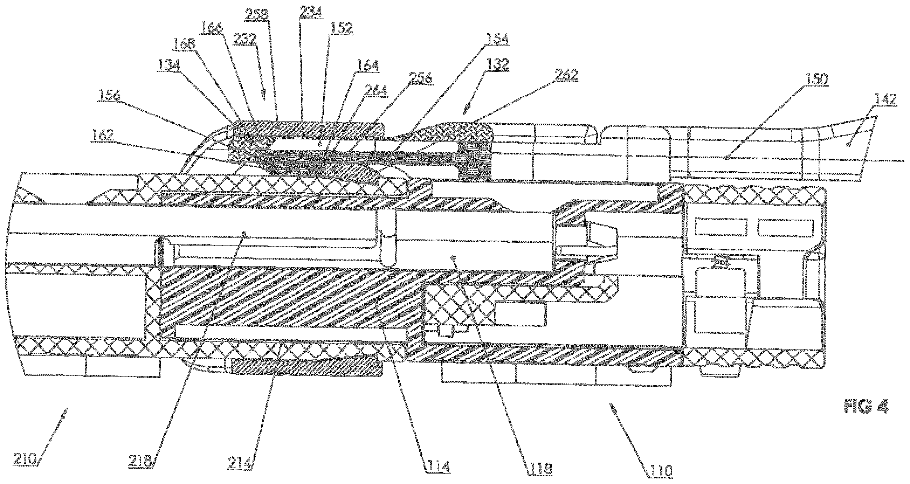

La figure 4 montre en coupe selon un plan médian, le premier et le deuxième connecteur 110 et 210 assemblés avec le dispositif de verrouillage 132, 232 en position verrouillée. La partie d'insertion mâle 114 du boîtier mâle, sur la droite de la figure, est entièrement insérée dans la partie d'insertion femelle 214 du boîtier femelle sur la gauche de la figure. Les éléments de contact mâle et femelle ne sont pas visibles sur la figure 3 car disposés de part et d'autre du pian de coupe.
Le plan de coupe passe dans les organes détrompeurs 118, 218.
On peut observer que, conjointement à l'insertion mutuelle des parties d'insertion mâle et femelle des connecteurs, le pêne 134 vient se loger de manière ajustée dans la gâche 234. A l'intérieur de la gâche 234, une extrémité libre du pêne 134 vient en appui contre le ponton 258 de la gâche 234. On peut également observer que la languette 154 du pêne présente un deuxième relief de verrouillage 156 qui, dans la position verrouillée, est logé derrière le premier relief de verrouillage 256 de la gâche 234. Le deuxième relief de verrouillage 156 se trouve sur un côté du premier relief de verrouillage 256 opposé à l'extrémité libre du deuxième connecteur 210. Lors de l'insertion du pêne 134 dans la gâche 234, la languette est légèrement fléchie vers l'intérieur du logement 152 du pêne. La flexion de la languette s'accompagne d'un déplacement du deuxième relief de verrouillage 156 perpendiculairement à l'axe 150 du pêne et permet son passage le long du premier relief de verrouillage 256. Lorsque l'insertion est complète, le deuxième relief de verrouillage 156 vient s'insérer derrière le premier relief 256 dans sa position saillante, sous l'effet d'une force de rappel exercée par la languette 154.

Des bords 162, 262 des reliefs de verrouillage présentent une forme en biseau. Lors de l'insertion du pêne 134 dans la gâche 234 les biseaux constituent des rampes qui viennent en contact et qui facilitent le déplacement du deuxième relief de verrouillage 156 de sa position saillante à sa position rétractée dans le logement du pêne.

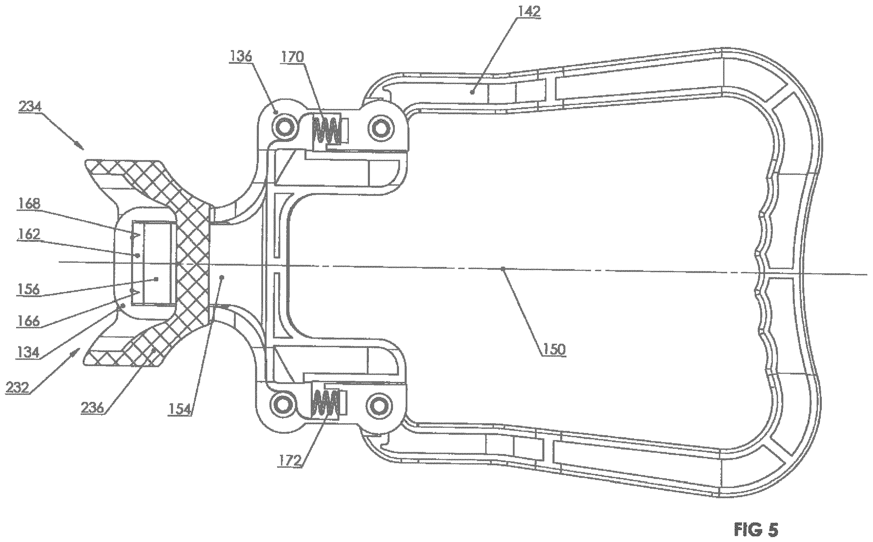

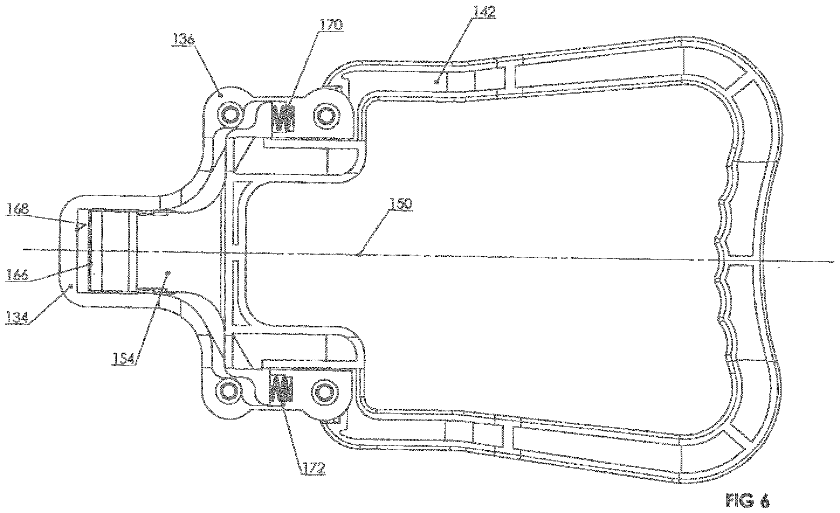

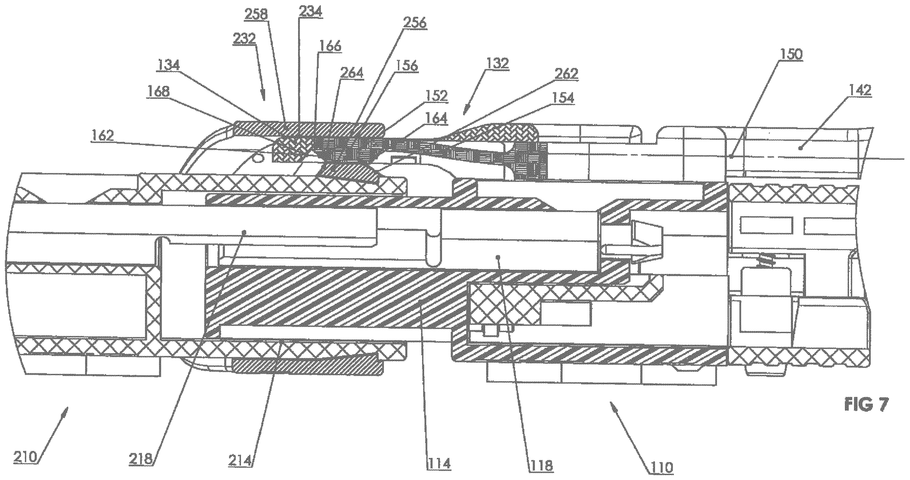

La figure 4 montre le dispositif de verrouillage dans une position verrouillée. Dans cette position, une traction sur les boîtiers mâle et femelle 112, 212, ne permet pas de séparer les connecteurs 110, 120. Une interaction entre des bords 164, 264 en regard du premier relief de verrouillage 256 et du deuxième relief de verrouillage 156 empêche un mouvement du pêne 134 tendant à l'extraire de la gâche selon son axe.
De plus, une interaction entre un bord d'appui 166 de l'extrémité de la languette 154 avec un bord d'appui 168 conjugué du pêne empêche une nouvelle flexion de la languette et donc un nouveau passage du deuxième relief de verrouillage 156 au-dessus du premier relief de verrouillage, dans un sens d'extraction du pêne.
Une séparation du premier et du deuxième connecteur n'est possible que par l'exercice d'une traction sur la poignée 142 du premier connecteur, le deuxième connecteur étant maintenu fixe.
La libération du verrouillage par une traction sur la poignée est mieux comprise en se référant aux figures 5 et 6.
La figure 5 montre le mécanisme de verrouillage selon une face destinée à être tournée vers les connecteurs. Sur cette figure, la bague de fixation 236 de la gâche 234 apparaît en coupe partielle.

La première partie du mécanisme de verrouillage 132 est en prise avec la deuxième partie du mécanisme de verrouillage 232, le pêne 134 étant engagé dans la gâche 234.
On note que la languette 154 est solidaire de la poignée 142, tandis qu'elle présente une liberté de translation dans le logement du pêne, par rapport à l'extrémité du pêne notamment. La translation a lieu selon l'axe du pêne 150. Plus précisément la languette présente une liberté de translation entre une position proximale, représentée sur les figures 4 et 5 et une position distale représentée à la figure 6. Dans la position proximale l'extrémité 166 de la languette touche le bord d'appui 168 du pêne et empêche sa flexion. Des ressorts de rappel 170, 172 logés entre l'embase 136 solidaire du pêne 134 et une partie de la poignée 142 solidaire de la languette 154 rappellent et maintiennent la languette dans la position proximale.
La figure 6, qui ne représente que première partie du mécanisme de verrouillage, montre la position distale de la languette 154, dans laquelle son extrémité 166 est séparée du bord d'appui 168 conjugué du pêne, et dans laquelle une flexion de la languette est possible. Le déplacement de la languette dans la position distale est opéré en tirant sur la poingée 142, dans un sens opposé à l'extrémité du pêne 134 tout en maintenant fixe l'un parmi, l'embase 136, le premier connecteur ou le deuxième connecteur lorsqu'il est assemblé au premier connecteur. En effet, lorsque le deuxième connecteur, et donc le boîtier femelle est maintenu fixe la même traction sur la poignée permet non seulement de déplacer la languette 154 dans la position distale mais aussi de retirer subséquemment le pêne de la gâche, de retirer le boîtier mâle du boîtier femelle et de séparer le premier et le deuxième connecteur.
Le déplacement de la languette 154 dans la position distale, libère le déplacement du deuxième relief de verrouillage 156 de sa position saillante à sa position rétractée selon un axe perpendiculaire au plan de la figure 6. Lors de l'extraction du pêne de la gâche, le passage du deuxième relief au-dessus du premier relief, est facilité par une configuration en biseau des bords en regard 164, 264 des reliefs de verrouillage. Cette caractéristique est visible sur la figure 4.
Comme mentionné également en référence à la figure 4, et de manière comparable, les bords 162 et 262 des reliefs de verrouillage 156, 256 qui viennent en contact au début de l'introduction du pêne 134 dans la gâche 234 présentent également un biseau. Ils peuvent ainsi servir de rampe pour soulever le deuxième relief de sa position saillante à la position rétractée.
Les bords 162, 262 des reliefs de verrouillage ont cependant une autre fonction au début de l'introduction du pêne 134 dans la gâche 234. Cette fonction, lorsque les reliefs viennent en contact, est de repousser légèrement la languette 154 de sa position proximale vers la position distale. La force nécessaire pour repousser la languette provient de la force exercée pour accoupler les connecteurs 110, 210. Ainsi, lors de l'engagement du boîtier mâle 112 dans le boîtier femelle 212, et lors de l'engagement concomitant du pêne 134 dans la gâche 234, aucune action sur la poignée 142 n'est nécessaire pour libérer la languette 154.

## Revendications

1. Dispositif de verrouillage pour un ensemble de connecteurs électriques comprenant au moins un premier (110) et un deuxième connecteur (210) conjugués, pouvant être accouplés, le dispositif de verrouillage comprenant :
- au moins une gâche (234) susceptible d'être rendue rigidement solidaire du deuxième connecteur (210), la gâche présentant un passage (260) pour pêne, et dans le passage pour pêne, un premier relief de verrouillage (256).
- au moins un pêne (134) susceptible d'être rendu rigidement solidaire du premier connecteur (110), le pêne présentant une section ajustée au passage de pêne (260) de la gâche (234), pour une introduction du pêne dans la gâche, parallèlement à un axe du pêne (150),
- une languette (154), reçue dans un logement (152) du pêne, la languette s'étendant parallèlement à l'axe (150) du pêne, et étant configurée pour être introduite dans la gâche (234) conjointement avec le pêne, la languette étant pourvue d'un deuxième relief de verrouillage (156) et la languette présentant une flexibilité suffisante pour un déplacement du deuxième relief de verrouillage (156) entre une position saillante sur une face du pêne tournée vers le premier relief de verrouillage lors d'une introduction du pêne (134) dans la gâche (234), et une position rétractée dans le logement (152) du pêne, le deuxième relief de verrouillage (156) étant configuré pour un passage le long du premier relief de verrouillage dans la position rétractée lors de l'introduction du pêne dans la gâche et pour occuper la position saillante derrière le premier relief de verrouillage (256) dans un sens d'introduction du pêne dans la gâche, lorsque le pêne occupe une position de verrouillage dans la gâche.

2. Dispositif de verrouillage selon la revendication 1, dans lequel la languette (154) et le pêne (134) sont pourvues de plages d'appui conjuguées (166, 166), la languette présentant une liberté de translation dans le logement du pêne, parallèlement à l'axe du pêne, entre :
- une position proximale, dans laquelle les plages d'appui conjuguées sont en contact, et dans laquelle les plages d'appui conjuguées interdisent une flexion de la languette (154) avec un déplacement du deuxième relief de verrouillage (156) de la position saillante vers la position rétractée, et
- une position distale, dans laquelle les plages d'appui conjuguées (166,168) sont séparées, pour autoriser un déplacement du deuxième relief de verrouillage (156) de la position saillante vers la position rétractée.

3. Dispositif de verrouillage selon la revendication 2, dans lequel la position proximale de la languette est plus proche d'une extrémité libre du pêne (134) que la position distale de la languette.

4. Dispositif de verrouillage selon la revendication 2 ou 3, comprenant une poignée (142), solidaire de la languette, actionnable pour déplacer la languette de la position proximale vers la position distale.

5. Dispositif de verrouillage selon la revendication 4, dans lequel la poignée (142) présente un axe médian de traction (143) formant avec l'axe (150) du pêne (134) un angle compris entre 0 et 20 degrés d'angle.

6. Dispositif de verrouillage selon l'une des revendications 2 à 5, comprenant au moins un ressort de rappel (170, 172) de la languette dans la position proximale.

7. Dispositif de verrouillage l'une des revendications précédentes, dans lequel au moins l'un du premier relief de verrouillage (256) et du deuxième relief de verrouillage (156) présente au moins une rampe (162, 262, 164, 264) configurée pour coopérer avec l'autre du premier relief de verrouillage et du deuxième relief de verrouillage, et pour pousser le deuxième relief de verrouillage de la position saillante vers la position rétractée lors d'une introduction du pêne (134) dans la gâche (234) ou lors d'un retrait du pêne (134) de la gâche (234).

8. Ensemble de connecteurs comprenant au moins un premier et au moins un deuxième connecteurs conjugués (110, 210), et un dispositif de verrouillage (132,232) selon l'une quelconque des revendications précédentes, dans lequel la gâche (234) est rigidement solidaire du deuxième connecteur (210) et dans lequel le pêne (134) est rigidement solidaire du premier connecteur (110).

9. Ensemble de connecteurs selon la revendication 8, dans lequel le premier et le deuxième connecteur (110, 210) comportent des boîtiers (112, 212) en un matériau isolant électrique, logeant chacun au moins un éléments de contact électrique (116, 216), au moins l'un des boîtiers et des éléments de contact électrique des premier et deuxième connecteurs présentant une complémentarité de forme autorisant une insertion mutuelle, et dans lequel le pêne (134) et la gâche (234) sont solidaires des boîtiers et configurés pour une insertion du pêne dans la gâche, respectivement d'un retrait du pêne de la gâche, simultanément à l'insertion mutuelle, respectivement d'un retrait, des éléments de contact et/ou des boîtiers.

10. Ensemble de connecteurs selon la revendication 9, dans lequel le pêne (134) est solidaire du boîtier du premier connecteur par vissage.

11. Ensemble de connecteurs selon la revendication 10, dans lequel la gâche (234) est solidaire du deuxième connecteur par emboîtement irréversible.

## Patentansprüche

1. Verriegelungsvorrichtung für elektrische Anschlüsse, umfassend mindestens einen ersten (110) und einen zweiten zusammenpassenden Anschluss (210), die verkoppelt werden können, wobei die Verriegelungsvorrichtung Folgendes umfasst:
- mindestens ein Schließblech (234), das mit dem zweiten Anschluss (210) monolithisch ausgebildet sein kann,
- wobei das Schließblech einen Riegeldurchlass (260) und in dem Riegeldurchlass eine erste Verriegelungsstruktur (256) aufweist,
- mindestens einen Riegel (134), der mit dem ersten Anschluss (110) monolithisch ausgebildet sein kann,
- wobei der Riegel einen Abschnitt aufweist, der an den Riegeldurchlass (260) des Schließblechs (234) angepasst ist, um den Riegel parallel zu einer Riegelachse (150) in das Schließblech einzuführen,
- eine Zunge (154), die in einer Ausnehmung (152) des Riegels aufgenommen ist, wobei sich die Zunge parallel zur Achse (150) des Riegels erstreckt und dazu konfiguriert ist, in das Schließblech (234) zusammen mit dem Riegel eingeführt zu werden, wobei die Zunge mit einer zweiten Verriegelungsstruktur (156) versehen ist und die Zunge eine ausreichende Flexibilität aufweist, um die zweite Verriegelungsstruktur (156) zwischen einer vorspringenden Position auf einer Seite des Riegels, die der ersten Verriegelungsstruktur zugewandt ist, wenn der Riegel (134) in das Schließblech (234) eingeführt wird, und einer in die Ausnehmung (152) zurückgezogene Position zu verschieben, wobei die zweite Verriegelungsstruktur (156) für einen Durchlass entlang der ersten Verriegelungsstruktur in der zurückgezogenen Position konfiguriert ist, wenn der Riegel in das Schließblech eingeführt wird, und dazu, eine vorspringende Position hinter der ersten Verriegelungsstruktur (256) in eine Einführungsrichtung des Riegels in dem Schließblech einzunehmen, wenn der Riegel eine Verriegelungsposition in dem Schließblech einnimmt.

2. Verriegelungsvorrichtung nach Anspruch 1, wobei die Zunge (154) und der Riegel (134) mit zusammenpassenden Stegen (166, 168) versehen sind, wobei die Zunge einen translatorischen Freiheitsgrad parallel zur Achse des Riegels in der Ausnehmung des Riegels aufweist, und zwar zwischen:
- einer proximalen Position, in der die zusammenpassenden Stege in Kontakt stehen und in der die zusammenpassenden Stege eine Biegung der Zunge (154) mit einer Verschiebung der zweiten Verriegelungsstruktur (156) der vorspringenden Position in die zurückgezogene Position verhindern, und
- einer distalen Position, in der die zusammenpassenden Stege (166, 168) getrennt sind, um eine Verschiebung der zweiten Verriegelungsstruktur (156) von der vorspringenden Position in die zurückgezogene Position zu ermöglichen.

3. Verriegelungsvorrichtung nach Anspruch 2, wobei die proximale Position der Zunge näher an einer freien Extremität des Riegels (134) liegt als die distale Position der Zunge.

4. Verriegelungsvorrichtung nach Anspruch 2 oder 3, umfassend einen mit der Zunge fest verbundenen Griff (142), der zum Verschieben der Zunge von der proximalen Position in die distale Position betätigt werden kann.

5. Verriegelungsvorrichtung nach Anspruch 4, wobei der Griff (142) eine Traktionsmittelachse (143) aufweist, die zusammen mit der Achse (150) des Riegels (134) einen Winkel zwischen 0 und 20 Grad bildet.

6. Verriegelungsvorrichtung nach einem der Ansprüche 2 bis 5, umfassend zumindest eine Rückstellfeder (170, 172) der Zunge in der proximalen Position.

7. Verriegelungsvorrichtung nach einem der vorangehenden. Ansprüche, wobei mindestens eine von der ersten Verriegelungsstruktur (256) und der zweiten Verriegelungsstruktur (156) mindestens eine Auflauffläche (162, 262, 164, 264) aufweist, die dazu konfiguriert ist, in die andere von der ersten Verriegelungsstruktur und der zweiten Verriegelungsstruktur einzugreifen, und um die zweite Verriegelungsstruktur aus der vorspringenden Position in die zurückgezogene Position zu drücken, wenn der Riegel (134) in das Schließblech (234) eingeführt wird oder wenn der Riegel (134) aus dem Schließblech (234) herausgezogen wird.

8. Satz von Anschlüssen, umfassend mindestens einen ersten und mindestens einen zweiten zusammenpassenden Anschluss (110, 210) und eine Verriegelungsvorrichtung (132, 232) nach einem der vorangehenden Ansprüche, wobei das Schließblech (234) mit dem zweiten Anschluss (210) monolithisch ausgebildet ist und wobei der Riegel (134) mit dem ersten Anschluss (110) monolithisch ausgebildet ist.

9. Satz von Anschlüssen nach Anspruch 8, wobei der erste und der zweite Anschluss (110, 210) Gehäuse (112, 212) in einem elektrisch isolierenden Material aufweisen, die jeweils mindestens ein elektrisches Kontaktelement (116, 216) beherbergen, wobei mindestens eines der Gehäuse und eines der elektrischen Kontaktelemente des ersten und zweiten Anschlusses eine Formschlüssigkeit aufweisen, die eine gegenseitige Einführung ermöglicht, und wobei der Riegel (134) und das Schließblech (234) fest mit dem Gehäuse verbunden und zu einer Einführung des Riegels in das Schließblech bzw. zu einem Herausziehen des Riegels aus dem Schließblech gleichzeitig mit einer gegenseitigen Einführung bzw. einem Herausziehen der Kontaktelemente und/oder der Gehäuse konfiguriert sind.

10. Satz von Anschlüssen nach Anspruch 9, wobei der Riegel (134) fest mit dem Gehäuse des ersten Anschlusses durch Verschraubung verbunden ist.

11. Satz von Anschlüssen nach Anspruch 10, wobei das Schließblech (234) fest mit dem zweiten Anschluss durch irreversible Verzahnung verbunden ist.

## Claims

1. Locking device for a group of electrical connectors comprising at least one first connector (110) mating with a second connector (210) and which can be connected together wherein the locking device comprises:
- at least one latch (234) which can be attached rigidly as one piece to the second connector (210), wherein the latch has a passage (260) for a bolt, and, in the bolt passage, has a first raised locking portion (256),
- at least one bolt (134) which can be attached rigidly as one piece to the first connector (110), wherein the bolt has a section adapted to the passage (260) of a bolt in the latch (234), allowing the bolt to enter the latch parallel to an axis of the bolt (150),
- a tongue (154), fitting into a housing (152) in the bolt, wherein the tongue extends parallel to the axis (150) of the bolt, and is configured so that it can be inserted into the latch (234) together with the bolt, wherein the tongue is provided with a second raised locking portion (156) and the tongue is sufficiently flexible to allow the second raised locking portion (156) to be displaced between a position protruding on a face of the bolt turned towards the first raised locking portion when the bolt (134) is inserted into the latch (234), and a retracted position in the housing (152) of the bolt, wherein the second raised locking portion (156) is configured to pass along the first raised locking portion in the retracted position when the bolt is inserted into the latch and in order to occupy the protruding position behind the first raised locking portion (256) in a direction in which the bolt is inserted into the latch when the bolt occupies a locking position in the latch.

2. Locking device according to claim 1, in which the tongue (154) and the bolt (134) are provided with mating support areas (166, 168) wherein the tongue is able to move freely in the housing of the bolt, parallel to the axis of the bolt, between :
a proximal position, in which the mating support areas are in contact, and in which the mating support areas prevent the tongue (154) from bending, with a displacement of the second raised locking portion (156) from the protruding position towards the retracted position, and
- a distal position, in which the mating support areas (166, 168) are separated to allow the movement of the second raised locking portion (156) from the protruding position towards the retracted position.

3. Locking device according to claim 2, in which the proximal position of the tongue is nearer to a free end of the bolt (134) than the distal position of the tongue.

4. Locking device according to claim 2 or 3, comprising a handle (142), made in one piece with the tongue, which can be operated to displace the tongue from the proximal position towards the distal position.

5. Locking device according to claim 4, in which the handle (142) has a median pulling axis (143) forming an angle with the axis (150) of the bolt (134) of between 0 and 20 degrees.

6. Locking device according to any one of claims 2 to 5, comprising at least one spring (170, 172) to return the tongue to the proximal position.

7. Locking device according to any one of the preceding claims, in which at least one of the first raised locking portion (256) and of the second raised locking portion (156) has at least a ramp (162, 262, 164, 264) configured to co-operate with the other one of the first raised locking portion and of the second raised locking portion, and to push the second raised locking portion from the protruding position towards the retracted position when the bolt (134) is inserted in the latch (234) or when the bolt (134) is extracted from the latch (234).

8. Group of connectors comprising at least one first connector mating with at least one second connector (110, 210), and a locking device (132, 232) according to any one of the preceding claims, in which the latch (234) is rigidly attached to the second connector (210) and in which the bolt (134) is rigidly attached to the first connector (110).

9. Group of connectors according to claim 8, in which the first and the second connector (110, 210) have casings (112, 212) made from an electrically insulating material, each one accommodating at least one electrical contact element (116, 216), at least one of the casings and electrical contact elements of the first and second connectors being complementary in shape to allow mutual insertion, and in which the bolt (134) and the latch (234) are integral with the casings and configured for insertion of the bolt into the latch, or respectively for a retraction of the bolt from the latch at the same time as the mutual insertion, or respectively the retraction of the contact elements and/or of the casings.

10. Group of connectors according to claim 9, in which the bolt (134) is integral with the casing of the first connector by screwing.

11. Group of connectors according to claim 10, in which the latch (234) is integral with the second connector by irreversible interlocking.
